# EUROPÄISCHE PATENTANMELDUNG

(11) **EP 1 028 081 A2**
(43) Veröffentlichungstag der Anmeldung: **16.08.2000**
(21) Anmeldenummer: 00101490.1
(22) Anmeldetag: 26.01.2000
(51) Int. Cl.: B66B 11/04, H02K 7/10, H02K 7/102

(54) **Aufzugsantrieb mit elektrischem Antriebsmotor**

(30) Priorität: 10.02.1999 DE 19905390
(71) Anmelder: Ziehl-Abegg GmbH & Co.KG, 74653 Künzelsau (DE)
(72) Erfinder: Hoppenstedt, Roland, 74635 Kupferzell (DE); Sperling, Ulrich, 74653 Ingelfingen (DE)
(74) Vertreter: Schmitt, Hans, Dipl.-Ing.

(57) **Zusammenfassung**

Ein Aufzugsantrieb (1) mit einem eine Welle (2) beaufschlagenenden Rotor (3) und einem diesem gegenüber radial außenseitig angeordneten Stator (4) hat auf einem gegenüber dem Außendurchmesser des Stators (4) und des diesen umgebenden Statorgehäuses(9) größeren Durchmesser eine Bremsfläche (5). Die Welle (2) treibt direkt oder gegebenenfalls über ein Getriebe eine Seil- oder Treibscheibe (7) an. Auf der dieser Treibscheibe (7) axial abgewandten Seite des Stators (4) und des Statorgehäuses (9) ist ein die Bremsfläche (5) aufweisender, mit der Welle (2) in drehfester Verbindung stehender, von der Treibscheibe (7) getrennter eigener Bremsring (8) vorgesehen, der einen größeren Durchmesser als der Stator (4) hat und diesen in radialer Richtung zumindest bereichsweise überragt und/oder übergreift, so daß durch diesen Bremsring (8) und seine als Verbindung zu der Welle (2) dienende Halterung (13) die axiale Baulänge des Aufzugsantriebes (1) praktisch nicht vergrößert wird, obwohl der Bremsring (8) von der Treibscheibe (7) unabhängig und außerhalb des Statorgehäuses (9) angeordnet ist.

## Beschreibung

Die Erfindung betrifft einen Aufzugsantrieb mit elektrischem Antriebsmotor, nämlich mit einem Innenläufer-Asynchronmotor, mit horizontaler Welle, dessen mit der Welle verbundener Rotor radial außenseitig mit einem Stator versehen ist und der auf einem gegenüber dem Außendurchmesser des Stators größeren Durchmesser eine Bremsfläche einer Bremsvorrichtung aufweist, wobei die von dem Rotor angetriebene Welle direkt oder über ein Getriebe mit einer Seil- oder Treibscheibe verbunden ist.

Ein derartiger Aufzugsantrieb mit einem Innenläufer-Motor ist aus US 5 018 603 bekannt. Der Rotor ist dabei auf einer gegenüber einer festen Achse drehbar gelagerten Hülse, also einer Hohlwelle angeordnet, die gleichzeitig die Treibscheibe trägt, so daß die Anordnung getriebelos ist. Ein koaxial zu der Treibscheibe angeordneter zylindrischer Abschnitt der Treibscheibe dient dabei als außenliegende Bremsfläche. Dies bedeutet insbesondere beim Bremsen eine ganz erhebliche Zusatzbelastung der Treibscheibe und ihrer Lagerung. Darüber hinaus entsteht dabei unmittelbar an der Treibscheibe durch die Bremsvorgänge Abrieb, der die Treibscheibe und gegebenenfalls auch den Antriebsmotor verschmutzen kann.

Daneben sind Aufzugsantriebe mit Außenläufermotoren bekannt, bei denen die Bremsfläche an der Außenseite des Außenläufers vorgesehen werden kann, wobei aber die Übertragung der Drehbewegung zu einem erhöhten Lagerungsaufwand führt, weil der Stator innerhalb des rotierenden Rotors unterzubringen ist.

Bei derartigen Aufzugsantrieben wird zunehmend die Forderung nach besonders kurzer und kompakter Bauweise gestellt, unabhängig davon, ob es sich um getriebelose oder mit Getrieben versehene Aufzugsmaschinen für Seilaufzüge mit Treibscheibe handelt. Deshalb wird entweder die aufwendige Sonderbauweise mit einem Außenläufermotor benutzt, an dessen Außendurchmesser direkt gebremst wird, oder es werden Scheiben- oder Zangenbremsen vorgesehen, die nicht so wartungsfreundlich und gut zugänglich wie Backenbremsen sind.

Es besteht deshalb die Aufgabe, einen Aufzugsantrieb der eingangs genannten Art zu schaffen, bei welchem der Vorteil eines elektrischen Antriebsmotors mit innerem Rotor und außenseitigem Stator, insbesondere die einfache Übertragung der Drehbewegung von dem Rotor auf eine Abtriebswelle und dadurch auch die Möglichkeit der Verwendung von Standardkomponenten sowohl im mechanischen Bereich als auch bei der Reglerelektronik, beibehalten werden kann und dennoch eine kompakte Bauweise auch mit einer wirksamen und gut zugänglichen Bremse ermöglicht wird.

Zur Lösung dieser Aufgabe ist der eingangs genannte Aufzugsantrieb dadurch gekennzeichnet, daß auf der der Treibscheibe axial abgewandten Seite des Antriebsmotors ein die Bremsfläche aufweisender, mit der Welle in drehfester Verbindung stehender, von der Treibscheibe getrennter eigener Bremsring vorgesehen ist, der einen größeren Durchmesser als der Stator hat und diesen in radialer Richtung zumindest bereichsweise überragt und/oder übergreift.

Auf diese Weise wird also ermöglicht, daß der Rotor des Antriebsmotors in vorteilhafter Weise direkt die Abtriebswelle, sei es eine Hohlwelle, sei es eine Welle aus Vollmaterial beaufschlagt, die die Treibscheibe direkt oder über ein zwischengeschaltetes Getriebe antreibt, wobei der Bremsring von dieser Treibscheibe unabhängig und getrennt ist. Da er andererseits den Stator in radialer Richtung überragt oder übergreift, ergibt sich dennoch eine kompakte Bauweise. Gleichzeitig gelangt dadurch die Bremsfläche des Bremsringes auf einen relativ großen Durchmesser, so daß ein entsprechend hohes Bremsmoment erzeugt werden kann. Die Bremse selbst ist aufgrund dieser Anordnung von außen her gut und bequem zugänglich, insbesondere auch für Wartungs- oder Reparaturarbeiten.

Da die Bremsfläche des Bremsringes den Stator außenseitig umgibt, wird auch kaum zusätzliche axiale Baulänge benötigt, obwohl der Antriebsmotor einen äußeren Stator hat und die Bremse nicht unmittelbar an dem Rotor angreift. Da der Bremsring von der Treibscheibe unabhängig ist, eignet sich diese hinsichtlich des axialen Platzbedarfes günstige Anordnung auch für solche Aufzugsantriebe, bei denen zwischen Antriebsmotor und Treibscheibe ein Getriebe, beispielsweise ein innerhalb der Treibscheibe liegendes Planetengetriebe vorgesehen wird. Dieses kann über eine Kupplung mit dem Motor verbunden sein oder das Motorwellenende kann eine Verzahnung aufweisen, die direkt in die Eingangsritzel dieses Getriebes greift.

Eine konstruktiv günstige Anordnung kann darin bestehen, daß auf der der Treibscheibe axial abgewandten Seite des Antriebsmotors ein dessen Stator umschließendes und den Rotor abschirmendes Statorgehäuse mit einer zentralen Durchgangs- oder Lageröffnung für die Welle vorgesehen ist und daß der die Bremsfläche aufweisende Bremsring außerhalb dieses Gehäuses angeordnet ist. Der den Stator in radialer Richtung übergreifende oder überragende Bremsring kann also an der Außenseite des Gehäuses vorgesehen werden, weil er problemlos mit der die Durchgangs- oder Lageröffnung durchsetzenden Welle verbunden werden kann. Gleichzeitig wird erreicht, daß beim Bremsen entstehender Abrieb durch das Statorgehäuse vom Inneren des Antriebsmotors ferngehalten wird. Somit ergibt sich eine stabile Halterung und Lagerung des Antriebsmotors und insbesondere seines Rotors und seiner Welle und dennoch eine kompakte Bauweise, bei welcher die Bremsen auf einem großen Durchmesser und somit auch von außen her gut zugänglich angeordnet sind, ihr Abrieb aber vom Inneren des Motors ferngehalten wird.

Besonders günstig ist es dabei, wenn das Statorgehäuse einen den Stator radial außenseitig übergreifenden Wandabschnitt und einen den Stator und wenigstens einen Teil des Rotors auf der der Treibscheibe abgewandten Seite axial übergreifenden und abschirmenden Wandabschnitt mit der Lagerstelle oder Lagerung für die dort austretende Welle aufweist und die als Verbindung zwischen der Welle und dem Bremsring dienende Halterung des Bremsringes außerhalb des Statorgehäuses axial neben dem der Treibscheibe abgewandten Wandabschnitt des Gehäuses, insbesondere etwa parallel dazu, verläuft. Da ein solches Statorgehäuse und die Halterung des Bremsringes in axialer Richtung keine sehr großen Abmessungen und insbesondere kaum einen Abstand benötigen, ergibt dies in axialer Richtung eine sehr kurze und flache Bauweise, dennoch aber eine Trennung des Bremsbereiches von dem Antrieb und auch von der Treibscheibe, so daß die Bremse gut zugänglich und wartungsfreundlich ist, auf einem großen Durchmesser wirken kann und von ihr ausgehender Abrieb vom Inneren des Antriebes ferngehalten wird.

Besonders zweckmäßig ist es, wenn der Bremsring und seine mit der Welle drehfest verbundene Halterung einstückig miteinander ausgebildet sind. Dies erleichtert die Montage und erlaubt die Übertragung hoher Kräfte, obwohl die Bremsfläche gegenüber der Halterung in axialer Richtung etwas versetzt ist, um den Stator zu überragen oder zu umgreifen.

Für eine platzsparende und wirkungsvolle Gestaltung kann der Bremsring und seine Halterung glockenförmig oder napfförmig ausgebildet sein, wobei der radial außenliegende Rand dieser Glocke oder dieses Napfes als die Bremsfläche aufweisender Bremsring ausgebildet ist. Diese Glocke kann also in axialer Richtung auf die Welle aufgeschoben oder auf der Welle so montiert sein, daß der Stator ungriffen wird, so daß der größere Teil oder die gesamte Bremsfläche in axialer Richtung in dem von dem Stator oder seinem Gehäuse eingenommenen Bereich und Platz, aber radial demgegenüber weiter außen zu liegen kommt. Daraus ergibt sich eine in axialer Richtung kurze und flache Bauweise, die es erlaubt, diesen Aufzugsantrieb auch in schmalen Räumen, beispielsweise innerhalb eines Aufzugsschachtes unterzubringen.

Die Bremsfläche kann zylinderförmig und konzentrisch zu der Welle verlaufen und es kann wenigstens eine Bremsbacke, bevorzugt zwei Bremsbacken, zum Zusammenwirken mit dieser Bremsfläche vorgesehen sein, die beim Antrieb der Treibscheibe insbesondere elektromagnetisch gegen Federkraft gelüftet ist. Backenbremsen mit solchen außenseitig an einem Ring angreifenden Bremsbacken sind wartungsfreundlich und einfach zu handhaben. Darüber hinaus kann die Bremskraft auf eine relativ große Umfangsfläche des außenliegenden Bremsringes übertragen werden.

Wie erwähnt, können an der Bremsfläche wenigstens zwei etwa symmetrisch zueinander angeordnete Bremsbacken vorgesehen sein, die einen gemeinsamen Bremslüftmagneten im Bereich der ihrer Schwenklagerung abgewandten Enden aufweisen können. Dadurch wird der Umfang des Bremsringes sehr effektiv über einen großen Bereich wirksam gemacht und trotz der Verwendung zweier Bremsbacken kann ein einziger Bremslüftmagnet für deren Betätigung ausreichen.

Eine abgewandelte Ausführungsform kann darin bestehen, daß die Bremsfläche an einem sich in radialer Richtung erstreckenden scheibenförmigen Bremsring vorgesehen ist, an welchem wenigstens eine, insbesondere elektromagnetisch lüftbare Bremszange angeordnet ist. Anstelle einer zylindrischen Bremsfläche kann also auch eine scheibenförmige Bremsfläche radial außerhalb des Statorgehäuses angeordnet sein, also einen großen Umfang mit entsprechend großem Bremsmoment und guter Zugänglichkeit haben. Steht dabei dieser Umfangsbereich nur bereichsweise für die Bremse zur Verfügung, könnten zwar auch kürzere Bremsbacken oder stattdessen die vorerwähnte Scheibenbremse vorgesehen sein.

Für die flache und kompakte Bauweise ist es dabei günstig, wenn der sich in radialer Richtung von der Welle weg erstreckende scheibenförmige Bremsring etwa in einer Ebene mit dem den Stator und den Rotor axial abschirmenden Wandabschnitt oder axial in Richtung zu der Treibscheibe hin neben dieser Ebene angeordnet ist. Somit wird für diesen scheibenförmigen Bremsring, von seiner Halterung abgesehen, die der des zylindrischen Bremsringes etwa entsprechen kann, abgesehen, keine axiale Baulänge benötigt.

Vor allem bei Kombination einzelner oder mehrerer der vorbeschriebenen Merkmale und Maßnahmen ergibt sich ein Aufzugsantrieb für Seilaufzüge mit Treibscheibe und ohne oder mit Getriebe, zum Beispiel Planetengetriebe, mit einem Innenläufer-Asynchronmotor und mit einer Bremstrommel, wobei dennoch eine besonders kurze und kompakte Bauweise ermöglicht wird und die Bremswirkung an einem Bremsring der Bremstrommel mit großem Umfang erzeugt, gleichzeitig dabei entstehender Abrieb aber vom Inneren des Motors ferngehalten wird. Durch die als Glocke oder Napf ausgeführte Bremstrommel wird die Montage einerseits und die Kraftübertragung andererseits vereinfacht, ohne die Baulänge wesentlich zu vergrößern. Da der Motor ein Innenläufer-Asynchronmotor ist, können auch Standardkomponenten sowohl im mechanischen Bereich als auch bei der Reglerelektronik Verwendung finden.

Nachstehend sind Ausführungsbeispiele der Erfindung anhand der Zeichnung näher beschrieben. Es zeigt in teilweise schematisierter Darstellung:
- Fig.1: eine Stirnansicht und
- Fig.2: eine teilweise im Längsschnitt gehaltene Seitenansicht eines Aufzugsantriebes mit Innenläufermotor, auf dessen Welle einerseits eine Treibscheibe für die Seile und andererseits, auf der der Treibscheibe gegenüberliegenden Seite des Antriebsmotors, eine Glocke mit zylindrischer Bremsfläche angeordnet ist, die den Antriebsmotor in radialer Richtung überragt und in axialer Richtung übergreift, sowie
- Fig.3: eine der Figur 2 entsprechende Darstellung einer abgewandelten Ausführungsform, bei welcher die Bremsfläche an einem scheibenförmigen Bremsring außerhalb des Antriebsmotors vorgesehen ist.

Ein im ganzen mit 1 bezeichneter Aufzugsantrieb mit elektrischem Antriebsmotor hat eine in Gebrauchs- oder Montagestellung horizontale Welle 2, wobei ein mit der Welle 2 verbundener Rotor 3 des elektrischen Antriebsmotors radial außenseitig mit einem Stator 4 versehen beziehungsweise von diesem umschlossen ist. Der elektrische Antriebsmotor ist also ein Innenläufer und bevorzugt ein Innenläufer-Asynchronznotor.

Bei beiden Ausführungsbeispielen ist vorgesehen, daß dieser Aufzugsantrieb 1 auf einem gegenüber dem Außendurchmesser des Stators 4 größeren Durchmesser oder in einem Bereich mit größerem Durchmesser eine Bremsfläche 5 einer Bremsvorrichtung 6 aufweist, wobei die von dem Rotor 3 angetriebene und im Ausführungsbeispiel direkt beaufschlagte Welle 2 auch direkt oder über ein nur angedeutetes Getriebe 11 mit einer Seil- oder Treibscheibe 7 verbunden ist.

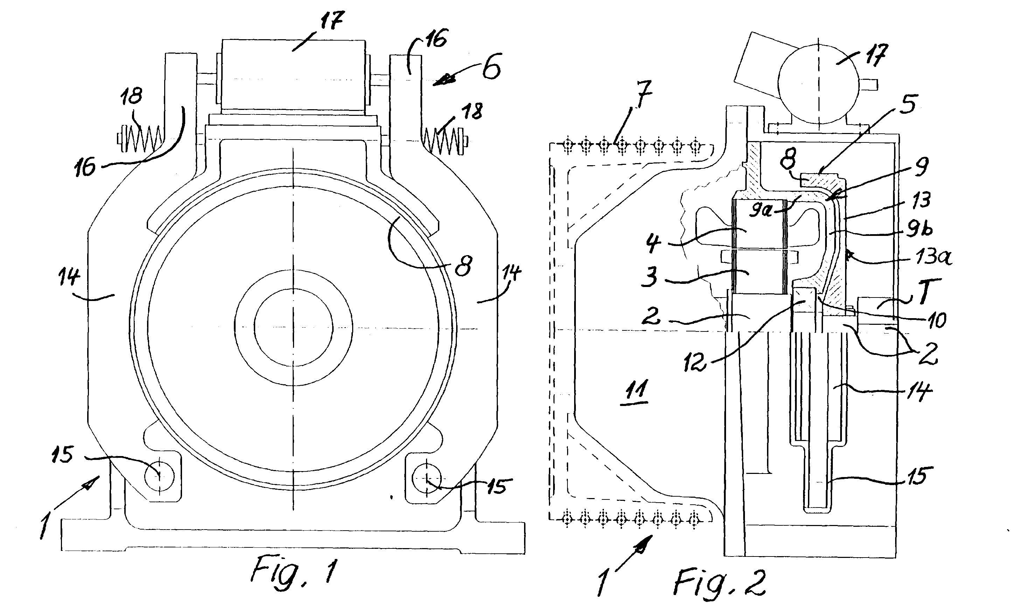

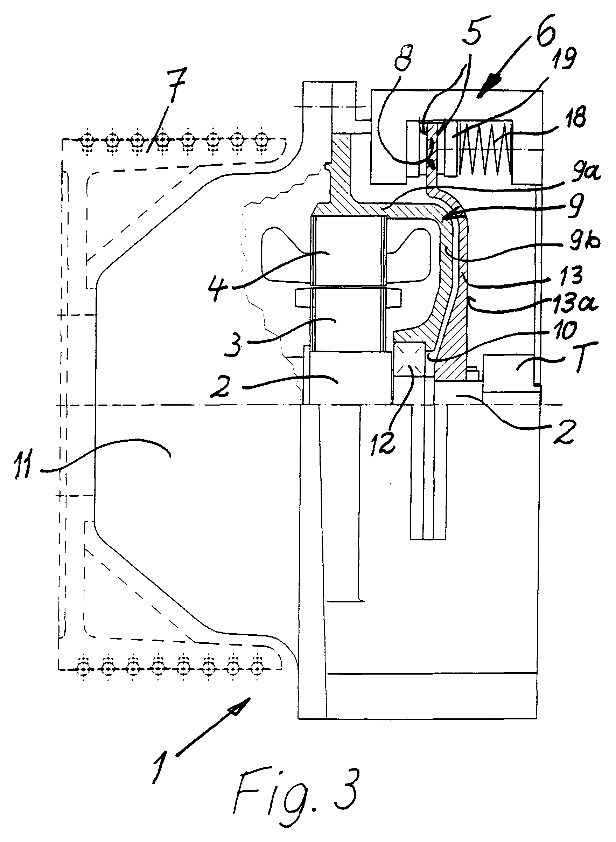

Gemäß Figur 2 und 3 ist vorgesehen, daß auf der der Treibscheibe 7 axial abgewandten Seite des Antriebsmotors und somit des Rotors 3 und des Stators 4 ein die Bremsfläche 5 aufweisender, mit der Welle 2 in noch zu beschreibender Weise in drehfester Verbindung stehender, von der Treibscheibe 7 getrennter eigener Bremsring 8 vorgesehen ist, der einen größeren Durchmesser als der Stator 4 hat und diesen in radialer Richtung zumindest bereichsweise überragt oder übergreift. Der dem Antriebsmotor und seinem Stator 4 in radialer Richtung benachbarte Bereich kann also dazu ausgenutzt werden, eine ausreichend große Bremsfläche 5 unterzubringen, ohne dadurch die axiale Baulänge wesentlich zu vergrößern und ohne diese Bremsfläche an unmittelbar zu dem Aufzugsantrieb gehörenden Teilen wie dem Antriebsmotor oder auch der Treibscheibe 7 anbringen zu müssen.

Auf der der Treibscheibe 7 axial abgewandten Seite des Antriebsmotors erkennt man in beiden Ausführungsbeispielen ein den Stator 4 übergreifendes und teilweise umschließendes und den Rotor 3 abschirmendes Statorgehäuse 9 mit einer zentralen Durchgangs- oder Lageröffnung 10 für die Welle 2. Der die Bremsfläche 5 aufweisende Bremsring 8 ist außerhalb dieses Gehäuses 9 angeordnet, so daß beim Bremsen entstehender Abrieb von dem Luftspalt zwischen Rotor 3 und Stator 4 und generell vom Inneren des elektrischen Antriebsmotors ferngehalten wird.

Das Statorgehäuse 9 ist auf der der Treibscheibe 7 abgewandten Seite an Rotor 3 und Stator 4 dadurch angepaßt, daß es einen den Stator 4 radial außenseitig übergreifenden Wandabschnitt 9a und einen den Stator 4 und wenigstens einen Teil des Rotors 3 auf der der Treibscheibe 7 abgewandten Seite axial übergreifenden und abschirmenden Wandabschnitt 9b mit der Lagerstelle oder Lageröffnung 10 für die Welle 2 aufweist. Der Antriebsmotor, bestehend aus Rotor 3 und Stator 4 ist also zumindest auf der der Treibscheibe 7 und einem dort eventuell vorgesehenen Getriebe 11 bis auf die Lageröffnung 10 vollständig umschlossen und geschützt. Die Welle 2 kann aber dennoch im Bereich der Lageröffnung 10 und einem dort vorgesehenen Lager 12 austreten, um eine Verbindung mit dem Bremsring 8 für dessen Drehantrieb zu ermöglichen und einen Tachometer T mit anzutreiben.

Für die Übertragung der Drehbewegung auf den Bremsring 8 ist dabei eine Halterung 13 dieses Bremsringes 8 vorgesehen, die außerhalb des Statorgehäuses 9 axial neben dem der Treibscheibe 7 abgewandten Wandabschnitt 9b des Statorgehäuses 9 etwa parallel zu diesem verläuft. Dabei erkennt man in den Figuren 2 und 3, daß das Statorgehäuse 9 im Bereich der Lageröffnung 10 und des Lagers 12 in axialer Richtung etwas eingezogen ist, so daß die erwähnte Halterung 13 in diesem Bereich eine größere axiale Dicke als radial weiter außen haben kann, ohne dadurch die axiale Baulänge zu vergrößern, was der Übertragung des Drehmomentes und damit umgekehrt auch des Bremsmomentes förderlich ist.

Dabei erkennt man, in beiden Ausführungsbeispielen, daß der Bremsring 8 und seine mit der Welle 2 drehfest verbundene Halterung 13 einstückig miteinander ausgebildet sind, also in einem Stück gefertigt sein können, was auch die Montage und die Justierung des Bremsringes 8 und seiner Bremsfläche 5 erleichtert.

Der Bremsring 8 und seine Halterung 13 sind dabei gemäß Figur 2 und auch gemäß Figur 3 etwa glockenförmig oder napfförmig ausgebildet. Der radial außenliegende Rand dieser "Glocke" oder dieses "Napfes" ist dabei als die Bremsfläche 5 aufweisender Bremsring 8 ausgebildet, wobei die Glocke oder der Napf so geformt und gekrümmt ist, daß dieser Bremsring 8 zwischen rechtwinklig zu der Welle 2 verlaufenden Ebenen angeordnet ist, die dem Rotor 3 näher als die von ihm abliegende äußere Oberfläche 13a der Halterung 13 verlaufen. Durch diese Glockenform wird also sichergestellt, daß die Bremsfläche 5 und der sie aufweisende Bremsring 8 die axiale Baulänge dieses Aufzugsantriebes nicht vergrößert.

Die beiden Ausführungsbeispiele unterscheiden sich hinsichtlich der Bremsvorrichtung 6 und dabei insbesondere auch hinsichtlich der Ausbildung und Formgebung der Bremsfläche 5. Beim Ausführungsbeispiel nach Figur 1 und 2 ist die Bremsfläche 5 zylinderförmig und konzentrisch zu der Welle 2 angeordnet und zum Zusammenwirken mit wenigstens einer Bremsbacke 14, gemäß Figur 1 zum Zusammenwirken mit zwei Bremsbacken 14 vorgesehen, die etwa symmetrisch zu einer vertikalen Längsmittelebene angeordnet sind und von zwei Seiten her ausgehend von unteren Schwenklagerungen 15 die zylindrische Bremsfläche 5 umfassen. An ihren den Schwenklagerungen 15 abgewandten Enden 16 sind diese Bremsbacken 14 durch einen gemeinsamen Bremslüftmagneten 17 beaufschlagt, der die Bremsbacken elektromagnetisch gegen die Kraft von Federn 18 offenhält oder lüftet, solange der Rotor 3 drehangetrieben wird.

Vor allem bei Betrachtung der Figur 1 wird deutlich, daß durch diese Anordnung einer zylindrischen Bremsfläche 5 unmittelbar außerhalb des Statorgehäuses 9 und dabei in einem konzentrisch zu einem Teil des Stators befindlichen Raum große Bremsbacken 14 in gut zugänglicher Lage und einfacher Konstruktion und Anordnung verwendet werden können, bei denen zusätzlich der Vorteil besteht, daß sie durch einen gemeinsamen Bremslüftmagneten 17 bedient werden können. Somit können die Vorteile solcher Bremsbacken nutzbar gemacht werden, ohne dadurch die axiale Baugröße des Aufzugsantriebes 1 zu vergrößern und ohne nur schwierig zugängliche Bremsvorrichtungen zu benötigen.

Beim Ausführungsbeispiel nach Figur 3 ist in Abwandlung der Lösung gemäß Figur 2 vorgesehen, daß die Bremsfläche 5 beidseits an einem sich in radialer Richtung erstreckenden scheibenförmigen Bremsring 8 vorgesehen ist, an welchem wenigstens eine, im Ausführungsbeispiel ebenfalls elektromagnetisch lüftbare Bremszange 19 angreift. Der sich in radialer Richtung von der Welle 2 und dem Statorgehäuse 9 weg erstreckende scheibenförmige Bremsring 8 ist dabei etwa in einer Ebene mit dem den Stator 4 und den Rotor 3 axial abschirmenden Wandabschnitt 9b oder sogar axial in Richtung zu der Treibscheibe 7 hin neben dieser Ebene angeordnet, vergrößert also ebenfalls nicht die axiale Baugröße dieses Aufzugsantriebes 1 gemäß Figur 3. Allerdings ist die Verwendung einer Bremszange 19 mit den dazu erforderlichen Betätigungselementen und deren Platzbedarf notwendig, was auch eine gegenüber Bremsbacken verminderte jeweils wirksame Bremsfläche bedeutet.

Der Aufzugsantrieb 1 mit einem eine Welle 2 beaufschlagenden Rotor 3 und einem diesem gegenüber radial außenseitig angeordneten Stator 4 hat auf einem gegenüber dem Außendurchmesser des Stators 4 und des diesen umgebenden Statorgehäuses 9 größeren Durchmesser eine Bremsfläche 5. Die Welle 2 treibt direkt oder gegebenenfalls über ein Getriebe eine Seil- oder Treibscheibe 7 an. Auf der dieser Treibscheibe 7 axial abgewandten Seite des Stators 4 und des Statorgehäuses 9 ist ein die Bremsfläche 5 aufweisender, mit der Welle 2 in drebfester Verbindung stehender, von der Treibscheibe 7 getrennter eigener Bremsring 8 vorgesehen, der einen größeren Durchmesser als der Stator 4 hat und diesen in radialer Richtung zumindest bereichsweise überragt und/oder übergreift, so daß durch diesen Bremsring 8 und seine als Verbindung zu der Welle 2 dienende Halterung 13 die axiale Baulänge des Aufzugsantriebes 1 praktisch nicht vergrößert wird, obwohl der Bremsring 8 von der Treibscheibe 7 unabhängig und außerhalb des Statorgehäuses 9 angeordnet ist.

## Patentansprüche

1. Aufzugsantrieb (1) mit elektrischem Antriebsmotor, nämlich mit einem Innenläufer-Asynchronmotor, mit horizontaler Welle, dessen mit der Welle (2)verbundener Rotor (3) radial außenseitig mit einem Stator (4) versehen ist und der auf einem gegenüber dem Außendurchmesser des Stators (4) größeren Durchmesser eine Bremsfläche (5) einer Bremsvorrichtung (6) aufweist, wobei die von dem Rotor (3) angetriebene Welle (2) direkt oder über ein Getriebe mit einer Seil- oder Treibscheibe (7) verbunden ist, **dadurch gekennzeichnet**, daß auf der der Treibscheibe (7) axial abgewandten Seite des Antriebsmotors ein die Bremsfläche (5) aufweisender, mit der Welle (2) in drehfester Verbindung stehender, von der Treibscheibe (7) getrennter eigener Bremsring (8) vorgesehen ist, der einen größeren Durchmesser als der Stator (4) hat und diesen in radialer Richtung zumindest bereichsweise überragt und/oder übergreift.

2. Aufzugsantrieb nach Anspruch 1, dadurch gekennzeichnet, daß auf der der Treibscheibe (7) axial abgewandten Seite des Antriebsmotors ein den Stator (4) umschließendes und den Rotor (3) abschirmendes Statorgehäuse (9) mit einer zentralen Durchgangs- oder Lageröffnung (10) für die Welle (2) vorgesehen ist und daß der die Bremsfläche (5) aufweisende Bremsring (8) außerhalb dieses Gehäuses (9) angeordnet ist.

3. Aufzugsantrieb nach Anspruch 1 oder 2, dadurch gekennzeichnet, daß das Statorgehäuse (9) einen den Stator (4) radial außenseitig übergreifenden Wandabschnitt (9a) und einen den Stator (4) und wenigstens einen Teil des Rotors (3) auf der der Treibscheibe (7) abgewandten Seite axial übergreifenden und abschirmenden Wandabschnitt (9b) mit der Lagerstelle oder Lageröffnung (10) für die Welle (2) aufweist und die als Verbindung zwischen der Welle und dem Bremsring dienende Halterung (13) des Bremsringes (8) außerhalb des Statorgehäuses axial neben dem der Treibscheibe (7) abgewandten Wandabschnitt (9b) des Statorgehäuses (9), insbesondere etwa parallel dazu, verläuft.

4. Aufzugsantrieb nach einem der Ansprüche 1 bis 3, dadurch gekennzeichnet, daß der Bremsring (8) und seine mit der Welle (2) drehtest verbundene Halterung (13) einstückig miteinander ausgebildet sind.

5. Aufzugsantrieb nach einem der Ansprüche 1 bis 4, dadurch gekennzeichnet, daß der Bremsring (8) und seine Halterung (13) glocken- oder napfförmig ausgebildet sind, wobei der radial außenliegende Rand dieser Glocke als die Bremsfläche (5) aufweisender Bremsring (8) ausgebildet ist.

6. Aufzugsantrieb nach einem der Ansprüche 1 bis 5, dadurch gekennzeichnet, daß die Bremsfläche (5) zylinderförmig und konzentrisch zu der Welle (2) verläuft und wenigstens eine Bremsbacke (14) zum Zusammenwirken mit dieser Bremsfläche vorgesehen ist, die beim Antrieb der Treibscheibe insbesondere elektromagnetisch gegen Federkraft gelüftet ist.

7. Aufzugsantrieb nach einem der Ansprüche 1 bis 6, dadurch gekennzeichnet, daß an der Bremsfläche wenigstens zwei etwa symmetrisch zueinander angeordnete Bremsbacken (14) vorgesehen sind, die einen gemeinsamen Bremslüftmagneten (17)im Bereich der ihrer Schwenklagerung (15) abgewandten Enden (16) aufweisen.

8. Aufzugsantrieb nach einem der Ansprüche 1 bis 6, dadurch gekennzeichnet, daß die Bremsfläche (5) an einem sich in radialer Richtung erstreckenden scheibenförmigen Bremsring (8) vorgesehen ist, an welchem wenigstens eine insbesondere elektromagnetisch lüftbare Bremszange (19) angeordnet ist.

9. Aufzugsantrieb nach Anspruch 8, dadurch gekennzeichnet, daß der sich in radialer Richtung von der Welle (2) weg erstreckende scheibenförmige Bremsring (8) etwa in einer Ebene mit dem den Stator (4) und den Rotor (3) axial abschirmenden Wandabschnitt (9b) oder axial in Richtung zu der Treibscheibe (7) hin neben dieser Ebene angeordnet ist.
